# EUROPEAN PATENT APPLICATION

(11) **EP 1 804 509 A1**
(43) Date of publication of application: **04.07.2007**
(21) Application number: 05790441.9
(22) Date of filing: 04.10.2005
(51) Int. Cl.: H04N 7/173

(54) **INFORMATION OUTPUT DEVICE AND PROGRAM**

(30) Priority: 18.10.2004 JP 2004302592
(71) Applicant: MATSUSHITA ELECTRIC INDUSTRIAL CO., LTD., Osaka 571-8501 (JP)
(72) Inventor: SHIMOTASHIRO, Masafumi c/o Matsushita El Ind, Chuo-ku, Osaka-shi, Osaka 540-6319 (JP); IMAMURA, Tetsuya c/o Matsushita El Ind Co, Ltd, Chuo-ku, Osaka-shi, Osaka 540-6319 (JP); NAKAMURA, Masakazu c/o Matsushita El Ind Co, Ltd, Chuo-ku, Osaka-shi, Osaka 540-6319 (JP)
(74) Representative: Pautex Schneider, Nicole Véronique
(86) International application number: PCT/JP2005/018380
(87) International publication number: WO 2006/043417

(57) **Abstract**

An information output apparatus is provided, which is capable of displaying past contents, current contents and future contents so that these past contents, current contents and future contents are seamlessly handled and clearly distinguished from each other for easy viewing. An information output apparatus (12) includes an output unit (1209) which arranges all or a part of past content information, current content information and future content information in two or more approximately concentric approximate circles and outputs these information in visually different display styles.

## Description

### Technical Field

The present invention relates to an information output apparatus or the like which outputs information and the like about contents accumulated in the past and currently broadcast contents.

### Background Art

As the first conventional art, there is the following program information display device (see Patent Reference 1). In the case of displaying program information for each of a plurality of channels sent from a TV broadcast station, this program information display device not only places the program information for the plurality of channels in the lateral direction of a display screen but also places the program information for the plurality of channels in every broadcast time slot in the depth direction of the display screen, so that they are displayed in three dimensions. In the case of displaying recorded program information sent from a plurality of recording/reproducing devices connected via a network, the program information display device not only places the program information sent from the plurality of recording/reproducing devices in the lateral direction of the display screen but also places the program information sent from the recording/reproducing devices in order of recording in the depth direction of the display screen, so that they are displayed in three dimensions. Therefore, this program information display device improves the usability.

As the second conventional art, there is the following contents display method (see Patent Reference 2). This contents display method is a contents display method for displaying a plurality of contents on a single display screen, and is characterized
in that the display scaling factor of each content is set gradually according to the predetermined order of the contents, the display scaling factor of each content is uniformly increased as time passes, and the contents within a predetermined range of display scaling factors are enlarged or reduced according to their display scaling factors so that they are displayed on the display screen. This contents display method enables the spiral display of contents.

As the third conventional art, there is the following time series data display method (see Patent Reference 3). This display method is a time series data display method for displaying accumulated time series data in time order, and is characterized in that first data corresponding to a desired date and time is searched and displayed, second data corresponding to the date and time that follows the desired date and time is searched, and the second data is displayed in the time direction from the desired date and time in the manner in which the second data can be distinguished from the first data.

Furthermore, as the fourth conventional art, there is the following information display device (see Patent Reference 4). This information display device is an information display device for displaying, on a display means, data which is recorded in a data recording unit and has at least a time attribute and another attribute than the time attribute, and is characterized in that it includes: a time division defining unit for defining a time division; an annual ring dividing function for creating an annual-ring-shaped metaphor in which the time axis goes from the inside to the outside, and for dividing the annual-ring-shaped metaphor into fan-shaped areas with the central point of the annual ring-shaped metaphor as a center, with reference to the attributes of the data recorded in the data recording unit; and an annual ring width determining function for determining the annual ring width of the annual-ring-shaped metaphor, with reference to the time division defined by the time division defining unit and the attribute other than the time attribute recorded in the data recording unit, and further includes: an annual ring plotting unit for placing the data in the radial direction of the created annual-ring-shaped metaphor, depending on the time attribute or the attribute other than the time attribute, and for placing the data in the circumferential direction of the annual-ring-shaped metaphor, depending on the time attribute or the attribute other than the time attribute; and a display control unit for performing control for displaying, on the display unit, the annual-ring-shaped metaphor created by the annual ring plotting unit and the information placed on the annual-ring-shaped metaphor.
Patent Reference 1: Japanese Laid-Open Patent Application No. 11-98431 Publication (page 1, FIG. 1 and others)
Patent Reference 2: Japanese Laid-Open Patent Application No. 11-65802 Publication (page 1, FIG. 2 and others)
Patent Reference 3: Japanese Laid-Open Patent Application No. 08-171471 Publication (page 1, FIG. 1 and others)
Patent Reference 4: Japanese Laid-Open Patent Application No. 2001-160073 Publication (page 1, FIG. 1 and others)

### Disclosure of Invention

### Problems that Invention is to Solve

However, the above-mentioned conventional arts do not handle, using the same interface, contents (such as program contents broadcast and accumulated in the past), programs which are being broadcast currently, and information of programs which are to be broadcast from now on. Therefore, it is not possible for a user to seamlessly handle past contents, current contents and future contents which are processed in a digital television equipped with a large capacity hard disk or the like which is currently on the market and expected to be more popular from now on, a video system in which a television and a hard disk drive are connected, or the like.

In the conventional arts, it is not also possible for a user to distinguish past contents, current contents and future contents from each other clearly at a glance.

The present invention has been conceived in view of the above circumstances, and it is an object of the present invention to provide an information output apparatus which is capable of not only seamlessly handling past contents, current contents and future contents but also displaying these past, current and future contents for easy viewing so that they are clearly distinguished from each other.

### Means to Solve the Problems

In order to attain the above-mentioned object, the information output apparatus according to the present invention is characterized in that it includes: a past content information storage unit which stores one or more items of past content information, each including at least one of a past content and information about the past content, the past content being a content accumulated in the past; a current content information storage unit which stores one or more items of current content information, each including at least one of an entirety or a part of a current content and program information, the current content being a currently broadcast program, and the program information being information about the current content; a future content information storage unit which stores one or more items of future content information, each being information about a future content that is a program to be broadcast from now on; and an output unit operable to arrange content information that is the past content information, the current content information and the future content information, and to output the content information in visually different display styles, based on time-related information included in the content information.

This structure enables a user to seamlessly handle past contents, current contents and future contents which are processed in a digital television equipped with a large capacity hard disk or the like which is currently on the market and expected to be more popular from now on, a video system in which a television and a hard disk drive are connected, or the like. It also becomes possible to display past contents, current contents and future contents for user's easy viewing so as to be clearly distinguished from each other.

Here, it is preferable that the above output unit outputs the content information in a display style in which color information of display gradually changes, per predetermined unit of the content information, according to the time-related information.

The output unit may also output the content information in a display style in which size of display gradually changes, per predetermined unit of the content information, according to the time-related information.

This makes it possible to display past contents, current contents and future contents for user's easy viewing so that they are clearly distinguished from each other.

Note that it is possible to embody the present invention not only as such information output apparatus, but also as an information output method that includes, as its steps, the characteristic units included in such information output apparatus, and as a program causing a computer to execute such steps. It should be also noted that such program can be distributed on a recording medium such as a CD-ROM and over a transmission medium such as the Internet.

### Effects of the Invention

According to the information output apparatus of the present invention, it becomes possible not only to seamlessly handle contents which were accumulated in the past, contents which are being broadcast currently, and contents which are to be broadcast in the future, but also to display these past contents, current contents and future contents for user's easy viewing so that they are clearly distinguished from each other.

### Brief Description of Drawings

FIG. 1 is a conceptual diagram of an information processing system in a first embodiment.
FIG. 2 is a block diagram of the information processing system in the first embodiment.
FIG. 3 is a flowchart for illustrating an operation of an information output apparatus of the first embodiment.
FIG. 4 is a flowchart for illustrating an operation of the information output apparatus in the first embodiment.
FIG. 5 is a diagram showing an example of past content information in the first embodiment.
FIG. 6 is a diagram showing an example of current content information and future content information in the first embodiment.
FIG. 7 is a diagram showing content information as it will appear when arranged in the first embodiment.
FIG. 8 is a diagram showing content information as it will appear when arranged in the first embodiment.
FIG. 9 is a diagram showing content information as it will appear when arranged in the first embodiment.
FIG. 10 is a diagram showing a display example of content information in the first embodiment.
FIG. 11 is a diagram showing a display example of content information in the first embodiment.
FIG. 12 is a diagram showing a display example of content information in the first embodiment.
FIG. 13 is a diagram showing a window management table in the first embodiment.
FIG. 14 is a diagram showing a display example of content information on an output unit.
FIG. 15 is a block diagram of an information processing system in a second embodiment.
FIG. 16 is a flowchart for illustrating an operation of an information output apparatus in the second embodiment.
FIG. 17 is a flowchart for illustrating an operation of the information output apparatus in the second embodiment.
FIG. 18 is a diagram showing a display example of content information in the second embodiment.
FIG. 19 is a diagram showing a window management table in the second embodiment.
FIG. 20 is a diagram showing the window management table in the second embodiment.
FIG. 21 is a diagram showing a display example of content information in the second embodiment.
FIG. 22 is a diagram showing a display example of content information in the second embodiment.
FIG. 23 is a block diagram of an information processing system in a third embodiment.
FIG. 24 is a flowchart for illustrating an operation of an information output apparatus in the third embodiment.
FIG. 25 is a diagram showing a display example of content information in the third embodiment.
FIG. 26 is a diagram showing a window management table in the third embodiment.

### Numerical References

11 Sending apparatus
12, 152, 232 Information output apparatuses
1101 Sending information storage unit
1102 Sending unit
1201 Receiving unit
1202 Accepting unit
1203 Past content information storage unit
1204 Current content information storage unit
1205 Future content information storage unit
1206 Past content information accumulation unit
1207 Current content information accumulation unit
1208 Future content information accumulation unit
1209, 15209, 23209 Output unit
1210 Operating unit
12101 Reproduction unit
12102 View switching unit
12103 Timer recoding preset unit
12104 Recording unit

### Best Mode for Carrying Out the Invention

The embodiments of an information output apparatus and the like will be described below with reference to the drawings. It should be noted that since the constituent elements assigned with the same reference numbers perform the same operations in the embodiments, the description thereof may not be repeated.

### (First Embodiment)

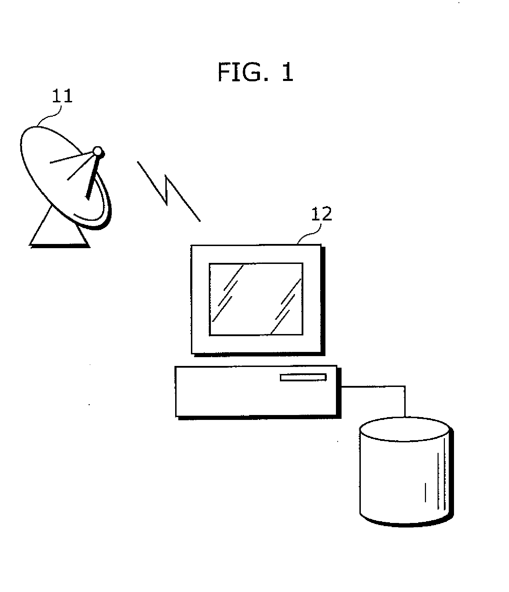

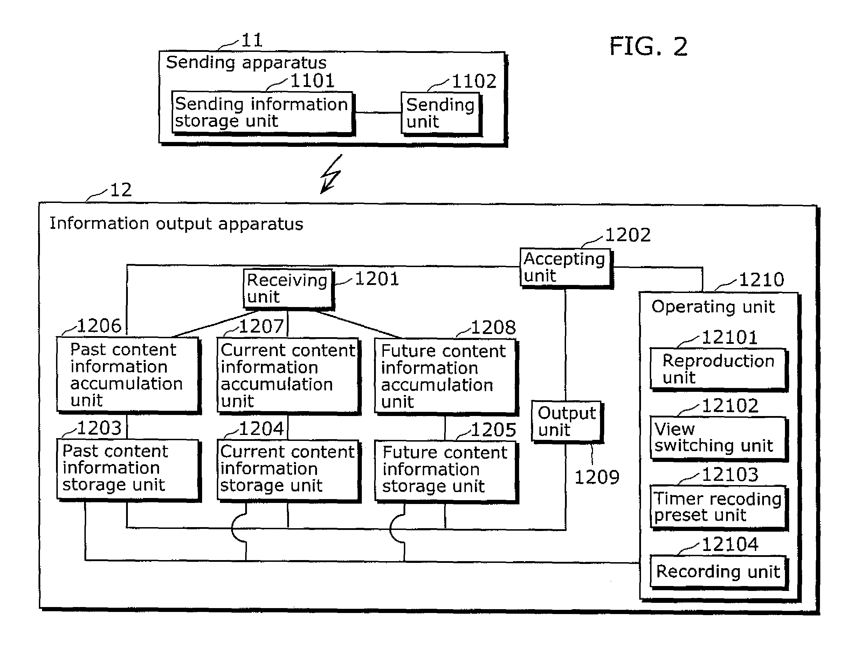

FIG. 1 is a conceptual diagram of an information processing system in the present embodiment. This information processing system includes a sending apparatus 11 and an information output apparatus 12. FIG. 2 is a block diagram of the information processing system in the present embodiment. The sending apparatus 11 includes a sending information storage unit 1101 and a sending unit 1102. The information output apparatus 12 includes a receiving unit 1201, an accepting unit 1202, a past content information storage unit 1203, a current content information storage unit 1204, a future content information storage unit 1205, a past content information accumulation unit 1206, a current content information accumulation unit 1207, a future content information accumulation unit 1208, an output unit 1209, and an operating unit 1210. The operating unit 1210 includes a reproduction unit 12101, a view switching unit 12102, a timer recording preset unit 12103, a recording unit 12104.

The sending information storage unit 1101 stores program information that is programs to be sent and the information about the programs. Here, sending usually means broadcast, but it may be communication using a network. Such communication may be wireless communication or wire communication. Furthermore, such communication may be communication with a specified partner or communication with an unspecified partner. Program information is, for example, information indicating a program title or a broadcast time slot, information indicating program performers' names, information indicating a program categories, or the like. A nonvolatile recording medium is suitable for the sending information storage unit 1101, but it may be embodied by a volatile recording medium.

The sending unit 1102 sends programs and program information stored in the sending information storage unit 1101. The sending unit 1102 can be embodied by a broadcast means, a wireless or wire communication means, or the like. Here, broadcast is a concept including digital terrestrial broadcast, analogue terrestrial broadcast, satellite broadcast, CATV broadcast, Internet broadcast and the like.

The receiving unit 1201 receives programs and program information. The receiving unit 1201 can be embodied by, for example, a tuner and its driver software. The receiving unit 1201 can also be embodied by, for example, a wireless or wire communication means or the like.

The accepting unit 1202 accepts a user's instruction. There are various instructions, for example, an instruction by a mouse click, an instruction by pressing the Enter button of a remote control, and the like. Or, the instruction may be a reproduction instruction to instruct reproduction of an accumulated content (hereinafter referred to as a past content), a viewing instruction to instruct viewing of a program which is being broadcast currently (hereinafter referred to as a current content), a recording instruction to instruct recording of a program which is to be broadcast from now on (hereinafter referred to as a future content), or the like. Or, the instruction may be, for example, a content list output instruction. The content list output instruction is an instruction to instruct output of a list of past content information or current content and future content information. The means for inputting such instruction may be anything such as a ten-key numeric keypad, a keyboard, a mouse, a remote control or a menu screen. The instruction may be an instruction about past content information, current content information or future content information. The accepting unit 1202 can be embodied by a device driver of an input means such as a ten-key numeric keypad, a keyboard, a remote control, or a control software for a menu screen.

The past content information storage unit 1203 stores one or more items of past content information being the information about past contents accumulated in the past. A content means, for example, a received program, a movie obtained through communication, a movie accumulated in an optical disk, or the like. The past content information may be a past-accumulated content itself, a still image (frame) that is an element of a past-accumulated content (including a moving image), information of the title, performers' names and the like of a past-accumulated content, or information including a past-accumulated content itself as well as its title, performers' names and the like. It should be noted that in the case where a content is a program which has been broadcast via digital broadcast or the like, past content information may include so-called SI information. This SI information includes the information about a program title, performers' names and the like.

The current content information storage unit 1204 stores one or more current content information, each including program information that is the information about a current content which is being broadcast currently and/or the entirety or a part of the current content. Program information is, for example, SI information. The entirety of a current content is the information of a program itself. Information of a program itself usually includes information of moving images and sound. Information of a program itself may include subtitle information. Current content information may be a still image (frame) that is an element of a program which is being broadcast currently.

The future content information storage unit 1205 stores future content information that is the information of future contents of the programs which are to be broadcast from now on. Future content information is, for example, SI information. Future content information does not usually contain the information of a program itself.

A nonvolatile recording medium is suitable for the past content information storage unit 1203, the current content information storage unit 1204 or the future content information storage unit 1205, but each of them may be embodied by a volatile recording medium. It should be noted that the past content information storage unit 1203, the current content information storage unit 1204 and the future content information storage unit 1205 may be embodied as a single recording medium, or may be embodied as two or more recording media. For example, it is possible that the past content information storage unit 1203 and the future content information storage unit 1205 are embodied by nonvolatile recording media, while the current content information storage unit 1204 is embodied by a volatile recording medium.

The past content information accumulation unit 1206 accumulates past content information in the past content information storage unit 1203. The past content information accumulation unit 1206 may accumulate past content information according to a user's instruction accepted by the accepting unit 1202, or automatically accumulate past content information.

The current content information accumulation unit 1207 accumulates current content information in the current content information storage unit 1204. The current content information accumulation unit 1207 usually accumulates current content information automatically, but it may accumulate current content information according to a user's instruction accepted by the accepting unit 1202.

The future content information accumulation unit 1208 accumulates future content information in the future content information storage unit 1205. The future content information accumulation unit 1208 also usually accumulates future content information automatically, but it may accumulate future content information according to a user's instruction accepted by the accepting unit 1202.

Each of the past content information accumulation unit 1206, the current content information accumulation unit 1207 and the future content information accumulation unit 1208 can usually be embodied by an MPU, a memory or the like. The processing procedure of each of the past content information accumulation unit 1206, the current content information accumulation unit 1207 and the future content information accumulation unit 1208 is usually embodied by software recorded on a recording medium such as a ROM. However, it may be embodied by hardware (a dedicated circuit). It should be noted that the current content information accumulation unit 1207 and the future content information accumulation unit 1208 may work at the same time. In other words, for example, in the case where both current content information and future content information are so-called electronic program table information (SI information), they are usually accumulated without being distinguished from each other.

The output unit 1209 arranges, in two or more approximate circles, all or a part of past content information and current content information, or all or a part of past content information, current content information and future content information, and outputs them so that the two or more approximate circles are arranged in an approximately concentric manner, based on predetermined concepts of past contents and current contents, or those of past contents, current contents and future contents. A predetermined concept means a time concept or a concept indicated by another attribute value. Another attribute value is, for example, a data size, a category (a program type such as news, dramas and sports), performers' names, or the like. It should be noted that a time concept is a concept indicated by an attribute value of time (including time slot) such as a time at which a content has been accumulated, a time at which a content has been broadcast, or a time at which a content is to be broadcast. A time concept that is one of the predetermined concepts may be considered as time information that is the time-related information. In addition, it is preferable that the output unit 1209 arranges, in two or more approximate circles, all or a part of past content information and current content information, or all or a part of past content information, current content information and future content information, and outputs them so that the two or more approximate circles are arranged in an approximately concentric manner, based on time-related information of past contents and current contents, or that of past contents, current contents and future contents. It is also preferable that the output unit 1209 outputs, in different approximate circles, all or a part of past content information and current content information, or all or a part of past content information, current content information and future content information. Furthermore, it is preferable that the output unit 1209 outputs current content information in the most eye-catching display manner. Outputting current content information in the most-eye-catching manner means, for example, displaying current content information in a larger size than past content information, or than past content information and future content information. Outputting current content information in the most eye-catching manner means, for example, displaying current content information in a more unblurred and clearer display manner than past content information, or than past content information and future content information. A blurred display means a display of an image on which blur processing is performed, a display of lower brightness, a display of which color has been changed based on the time concept such as past, current or future time, a transmittance-changed display, or the like. The above-mentioned output is a concept which mainly means a display on a display screen, but includes sound output, print output to a printer, sending to an external device and the like. It does not matter whether or not the output unit 1209 includes an output device such as a display and a speaker. The output unit 1209 can be embodied by software for performing output processing, or a combination of a software for performing output processing, a driver software of an output device, the output device, and the like.

The operating unit 1210 reproduces a past content corresponding to past content information in the case where the accepting unit 1202 accepts a reproduction instruction of the past content information outputted from the output unit 1209. The operating unit 1210 switches viewing to a current content corresponding to current content information in the case where the accepting unit 1202 accepts a viewing instruction of the current content information outputted from the output unit 1209. The operating unit 1210 presets timer recording of a future content corresponding to future content information in the case where the accepting unit 1202 accepts a recording instruction of the future content information outputted from the output unit 1209. It should be noted that the operating unit 1210 may output a received program. In such case, the accepting unit 1202 accepts, for example, a selection of a menu item (such as a menu item of a reproduction instruction, a menu item of a viewing instruction and a menu item of a recording instruction) on a menu screen.

The operating unit 1210 reproduces a past content corresponding to the past content information outputted from the output unit 1209, in the case where the accepting unit 1202 has accepted an instruction of the past content information. The operating unit 1210 switches viewing to a current content corresponding to the current content information outputted from the output unit 1209, in the case where the accepting unit 1202 has accepted an instruction of the current content information. The operating unit 1210 presets timer recording of a future content corresponding to the future content information outputted from the output unit 1209, in the case where the accepting unit 1202 accepts an instruction of the future content information. In such case, the accepting unit 1202 has accepted the same action (for example, pressing the ENTER button) with respect to past content information, current content information and future content information. It is assumed that the operating unit 1210 also performs an operation such as recording in addition to the above.

The reproduction unit 12101 reproduces a past content corresponding to past content information. The view switching unit 12102 switches viewing to a current content corresponding to current content information. The timer recording preset unit presets a timer recording of a future content corresponding to future content information. The recording unit 12104 performs a recording corresponding to a preset timer recording. Since the reproduction unit 12101, the viewing switching unit 12102, the timer recording preset unit 12103 and the recording unit 12104 can be embodied using the existing techniques, a detailed description thereof is not made here.

The operation of the information processing system will be described below. First, the operation of the sending apparatus 11 will be described. The sending unit 1102 of the sending apparatus 11 sends programs and program information stored in the sending information storage unit 1101. It does not matter if the sending unit 1102 uses any trigger for sending such programs and program information. The sending unit 1102 usually sends a previously stored program based on the information of the broadcast schedule of the program. Program information may be sent in a manner in which it is superimposed on a program, or may be sent over a separate channel from the program.

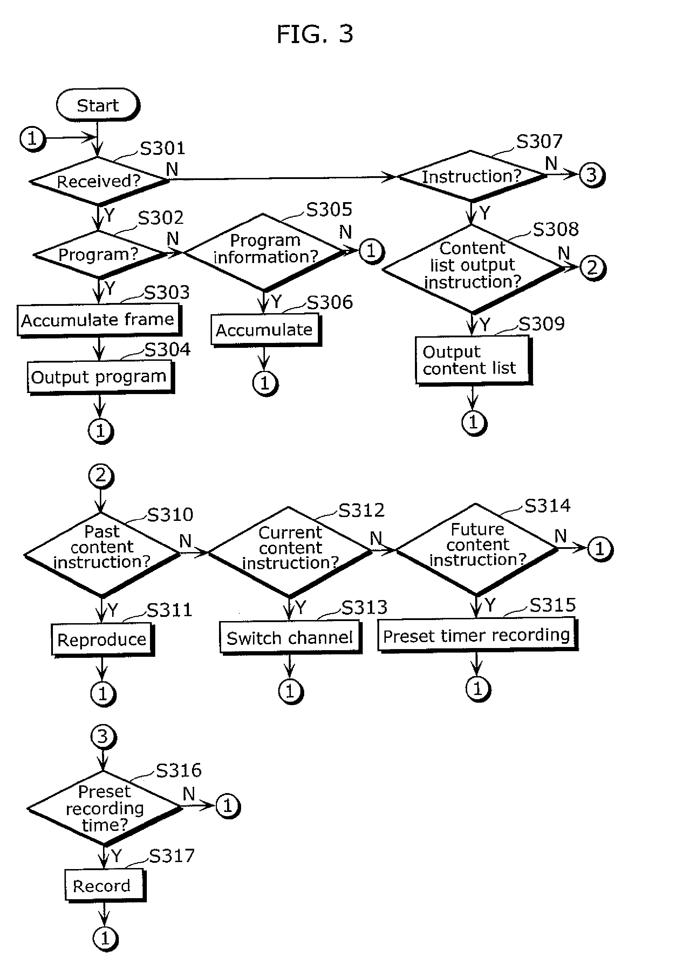

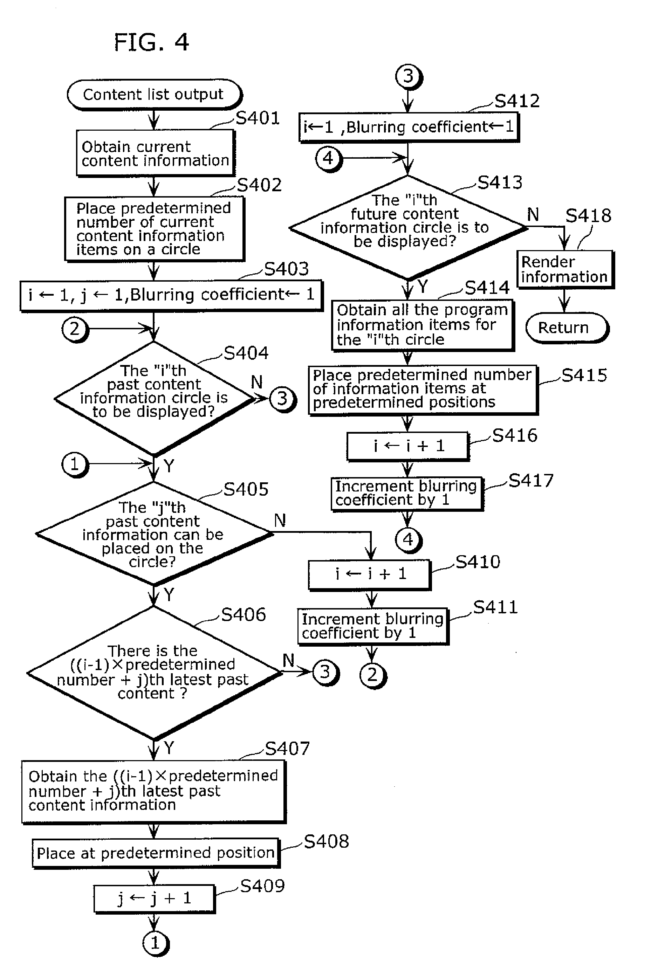

Next, the operation of the information output apparatus 12 will be described with reference to the flowcharts of FIG. 3 and FIG. 4.

(Step S301) The receiving unit 1201 judges whether or not it has received a program or program information. If it has received a program or program information, the process goes to Step 302, while if it has not received it, the process jumps to Step S307.

(Step S302) The receiving unit 1201 judges whether or not the information received in Step S301 is a program or not. If it is a program, the process goes to Step S303, while if it is not a program, the process jumps to Step S305.

(Step S303) The current content information accumulation unit 1207 accumulates a predetermined frame (for example, an "i" picture) being an element of a program that is current content information, in the current content information storage unit 1204.

(Step S304) The operating unit 1210 outputs the received program. This program output is normal program output processing, and processing in an existing television. The process returns to Step S301.

(Step S305) The receiving unit 1201 judges whether or not the information received in Step S301 is program information or not. If it is program information, the process goes to Step S306, while if it is not program information, the process returns to Step S301.

(Step S306) The future content information accumulation unit 1208 accumulates the program information received in Step S301, in the future content information storage unit 1205. It should be noted that this program information is the information including the future content information. The process returns to Step S301.

(Step S307) The accepting unit 1202 judges whether or not it has accepted a user's instruction. If it has accepted a user's instruction, the process goes to Step S308, while if it has not accepted a user's instruction, the process jumps to Step S316.

(Step S308) The accepting unit 1202 judges whether or not the instruction accepted in Step S307 is a content list output instruction. If it is a content list output instruction, the process goes to Step S309, while if it is not a content list output instruction, the process goes to Step S310.

(Step S309) The output unit 1209 outputs a content list. To be more specific, the output unit 1209 arranges, in two or more approximate circles, all or a part of past content information and current content information, or all or a part of past content information, current content information and future content information, and outputs them so that the two or more approximate circles are arranged in an approximately concentric manner, based on predetermined concepts of past contents and current contents, or those of past contents, current contents and future contents. The specific example of the content list output from the output unit 1209 will be described later. It should be noted that the detailed example of the content list output operation by the output unit 1209 will be described with reference to the flowchart of FIG. 4.

(Step S310) The accepting unit 1202 judges whether or not it has accepted an instruction for a past content. If it has accepted an instruction for a past content, the process goes to Step S313, while it has not accepted an instruction of a past content, the process jumps to Step S312.

(Step S311) The reproduction unit 12101 reproduces the past content corresponding to the past content information instructed in Step S310.

(Step S312) The accepting unit 1202 judges whether or not it has accepted an instruction for a current content. If it has accepted an instruction for a current content, the process goes to Step S313, while if it has not accepted an instruction for a current content, the process jumps to Step S314.

(Step S313) The viewing switching unit 12102 switches viewing to the current content corresponding to the current content information instructed in Step S312.

(Step S314) The accepting unit 1202 judges whether or not it has accepted an instruction for a future content. If it has accepted an instruction for a future content, the process goes to Step S315, while if it has not accepted an instruction for a future content, the process returns to Step S301.

(Step S315) The timer recording preset unit 12103 presets a timer recording of the future content corresponding to the future content information instructed in Step S314.

(Step S316) The recording unit 12104 judges whether or not it is the preset recording time. If it is the preset recording time, the process goes to Step S317, while if it is not the preset recording time, the process returns to Step S301.

(Step S317) The recording unit 12104 does recording depending on the preset timer recording. The process returns to Step S301.

It should be noted that in the flowchart of FIG. 3, the processing is terminated by an interruption of power-down or process termination.

In the flowchart of FIG. 3, the operating unit 1210 performs the operation suitable for each of past content information, current content information and future content information even if it has accepted the same action (for example, pressing of the ENTER button) for these content information. However, the operating unit 1210 may accept different actions respectively for past content information, current content information and future content information, and perform the operations corresponding to respective actions. To be more specific, the operating unit 1210 may reproduce a past content corresponding to the past content information outputted from the output unit 1209, in the case where the accepting unit 1202 has accepted a reproduction instruction for the past content information; switch viewing to a current content corresponding to the current content outputted from the output unit 1209, in the case where the accepting unit 1202 has accepted a viewing instruction for the current content information; and presets a timer recording of a future content corresponding to the future content information outputted from the output unit 1209, in the case where the accepting unit 1202 has accepted a recording instruction for the future content information.

Next, a detailed example of a content list output operation will be described with reference to the flowchart of FIG. 4.

(Step S401) The output unit 1209 obtains current content information stored in the current content information storage unit 1204.

(Step S402) The output unit 1209 places a predetermined number of current content information in an approximate circle. The output unit 1209 usually places two or more items of current content information equally spaced apart. The predetermined number may be previously determined, or may be the total number of current content information.

(Step S403) 1 is substituted into counters i and j. 1 is substituted into a blurring coefficient. A blurring coefficient is information indicating a degree of blurring of past content information or future content information to be displayed. It is assumed here that a content to be displayed is displayed in a more blurred manner as the value of the blurring coefficient increases.

(Step S404) The output unit 1209 judges whether or not the "i"th circle of the past content information is to be displayed. Since the number (the value thereof is "n") of concentric circles is usually determined for a display of past content information, and the output unit 1209 makes the judgment based on the comparison between this value "n" and "i". If it judges that the "i"th circle is to be displayed, the process goes to Step S405, while if it judges that the "i"th circle is not to be displayed, the process jumps to Step S412.

(Step S405) The output unit 1209 judges whether or not the "j"th past content information can be placed on the "i"th circle. It should be noted that the number of content information to be placed on a single circle is usually predetermined, and if the number of content information exceeds this number (a predetermined number), the "j"th past content information is not placed on the "i"th circle. If the "j"th past content information can be placed, the process goes to Step S406, while if the "j"th past content information cannot be placed, the process jumps to Step S410.

(Step S406) The output unit 1209 judges whether or not there is the ((i-1) x predetermined number + j)th latest past content information. If there is the ((i-1) x predetermined number + j)th latest past content information, the process goes to Step S407, while if there is no such information, the process jumps to Step S412.

(Step S407) The output unit 1209 obtains the ((i-1) x predetermined number + j)th latest past content information from the past content information storage unit 1203.

(Step S408) The output unit 1209 places the ((i-1) x predetermined number + j)th latest past content information at a predetermined position on the "i"th circle. It should be noted that placing means the processing for writing information at a predetermined coordinate position in a VRAM.

(Step S409) The output unit 1209 increments "j" by one. The process returns to Step S405.

(Step S410) The output unit 1209 increments "i" by one.

(Step S411) The output unit 1209 increments the blurring coefficient by one. The process returns to Step S404.

(Step S412) The output unit 1209 substitutes 1 into the counter i. The output unit 1209 substitutes 1 into the blurring coefficient.

(Step S413) The output unit 1209 judges whether or not to display the "i"th circle of future content information. If it judges that the "i"th circle is to be displayed, the process goes to Step S414, while if it judges that the "i"th circle is not to be displayed, the process goes to Step S418. Note that it is assumed that the number of circles to be displayed is previously determined for future content information.

(Step S414) The output unit 1209 obtains all the future content information to be placed on the "i"th circle from the future content information storage unit 1205. It should be noted that the number of future content information which can be placed on a single circle may be previously determined, or all the future content information to be broadcast within a predetermined period of time (for example, three hours from now on) may be placed on a single circle.

(Step S415) The output unit 1209 places all the future content information obtained in Step S414 on the "i"th circle.

(Step S416) The output unit 1209 increments "i" by one.

(Step S417) The output unit 1209 increments the blurring coefficient by one. The process returns to Step S413.

(Step S418) The output unit 1209 renders the placed content information. The processing of the output unit 1209 in this step is, for example, processing for outputting the screen images written in a VRAM on a screen.

It should be noted that in the flowchart of FIG. 4, current content information, past content information and future content information are arranged on the circles in this order, but they may be arranged in any order. In addition, any procedure for creating concentric circles, any algorithm and the like may be used.

A specific operation of the information processing system in the present embodiment will be described below. A conceptual diagram of the information processing system is shown in FIG. 1. First, the first specific example will be described.

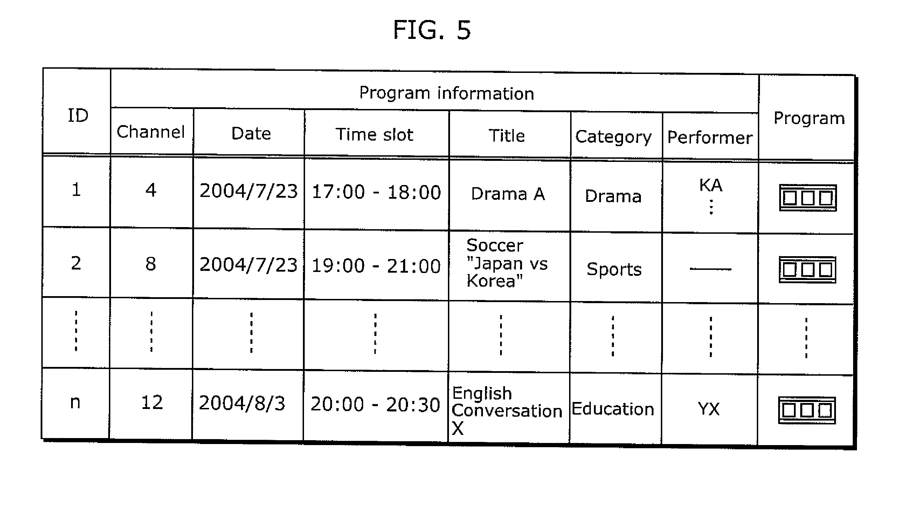

Now, a past content is a program (a program such as a movie, drama or news) received by the receiving unit 1201 and recorded. Past content information stored in the past content information storage unit 1203 includes a recorded program and program information including information of the broadcast time slot of the program, program title, performers' names and the like. Past content information stored in the past content information storage unit 1203 is shown in FIG. 5. These past contents may be the programs recorded according to user's instructions or the automatically recorded programs.

A current content is a program which is being broadcast currently. It is assumed that the current time is August 5, 2004, 19: 15. Current content information stored in the current content information storage unit 1204 is assumed to be information (SI information) of a previously received and accumulated electronic program table. Program information includes information of a broadcast channel, a broadcast date, a broadcast time slot, a title, a category and performers.

Furthermore, a future content is a program to be broadcast from now on. Future content information stored in the future content information storage unit 1205 is assumed to be previously received and accumulated program information (SI information). In other words, future content information and current content information are the same information here. The information output apparatus 12 contains a clock, and obtains current content information or future content information from the information of the stored electronic program table, based on the current time information of the clock.

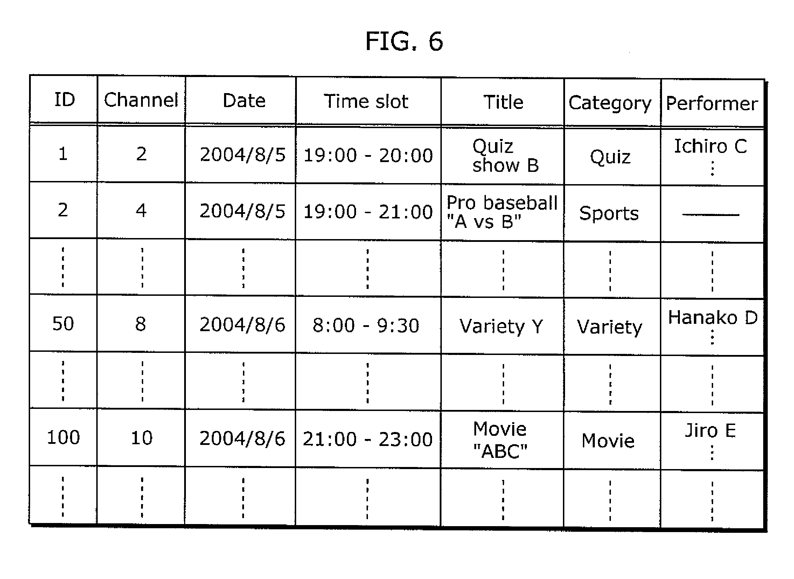

Note that FIG. 6 shows program information (an electronic program table) received by the receiving unit 1201 and accumulated. In other words, the electronic program table of FIG. 6 is stored in the current content information storage unit 1204 and the future content information storage unit 1205. In such case, the current content information storage unit 1204 and the future content information storage unit 1205 are usually a physically single recording medium.

Next, it is assumed that a user inputs a content list output instruction using a remote control, for example. In such case, the accepting unit 1202 accepts the content list output instruction.

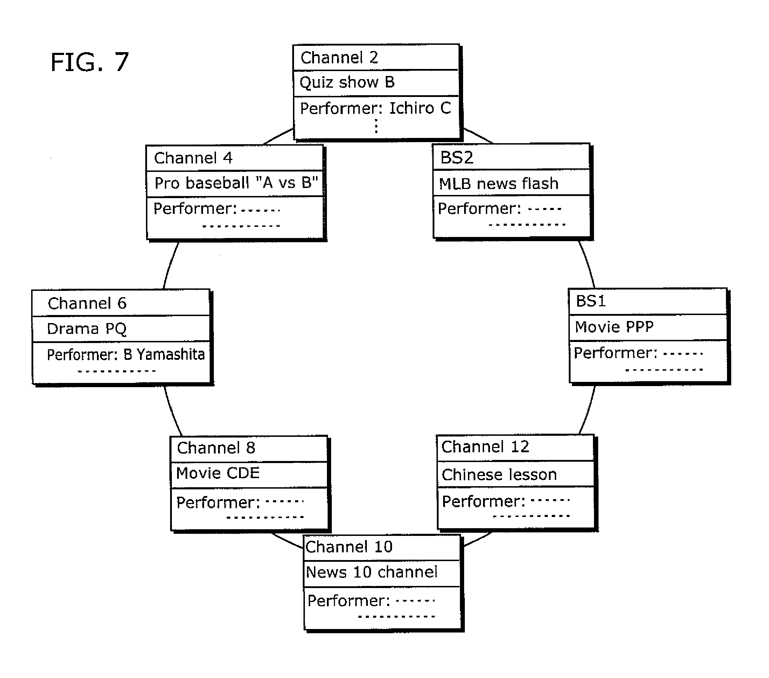

Next, the output unit 1209 obtains current content information stored in the current content information storage unit 1204. To be more specific, the output unit 1209 obtains the current time "August 5, 2004, 19:15" from the clock, and obtains, from the information of the electronic program table of FIG. 6, program information including the current time "August 5, 2004, 19:15" in its broadcast time slot (for example, the information of "ID=1" and "ID=2"). Then, the output unit 1209 arranges a predetermined number of current content information (program information) in an approximately concentric manner. Here, the predetermined number is eight. Note that in the case where there are eight or more program information including the current time "August 5, 2004, 19:15" in their broadcast time slots, eight items of program information may be obtained at random, or all items of program information whose display size is reduced may be obtained. FIG. 7 shows the current content information in the output unit 1209 as it will appear when arranged in this stage.

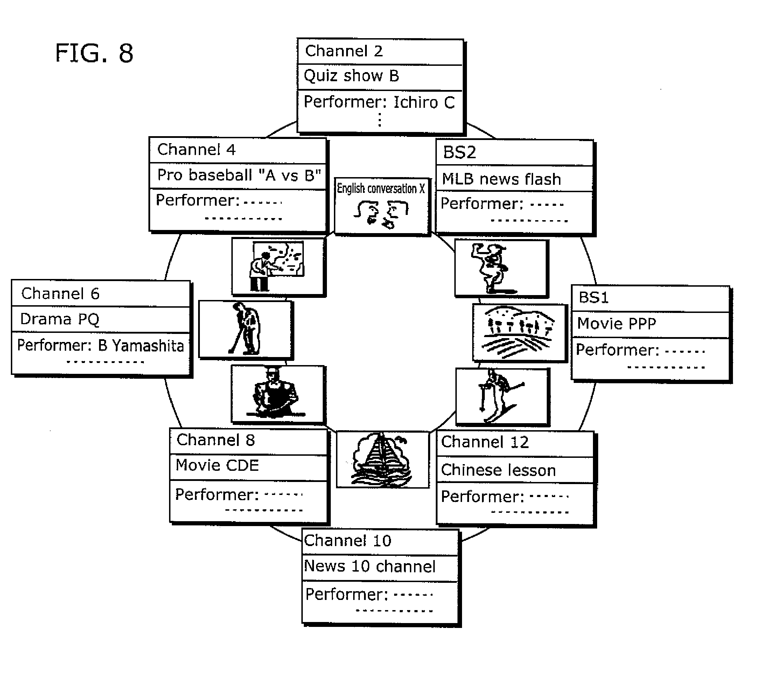

Next, the output unit 1209 substitutes 1 into the blurring coefficient. Then, the output unit 1209 performs the following processing in order to display the first approximate circle of the past content information. To be more specific, it searches for the past content information which has been accumulated in the recent past. In more detail, the output unit 1209 first obtains, from the past content information management table of FIG. 5, the program information of "ID=n" and the thumbnails (which may be arbitrary still images) that make up the program. It obtains a predetermined number (eight in this case) of past content information and creates the first approximate circle. The output unit 1209 places the past content information forming the approximate circle in the manner as shown in FIG. 8. It should be noted that the output unit 1209 performs some blurring processing on the thumbnails placed on the first approximate circle of the past content information based on the blurring coefficient "1". Blurring processing includes processing such as change in brightness, change in color, and/or change in transmittance, but this is one of the existing image processing techniques and therefore a detailed description thereof is not made here.

Next, the output unit 1209 changes the blurring coefficient to 2. Then, the output unit 1209 performs the following processing in order to display the second approximate circle of the past content information. To be more specific, the output unit 1209 obtains the ninth to seventeenth items of past content information (the ninth to seventeenth items of information from the latest one in the broadcast time slots in the table of FIG. 5). Then, the output unit 1209 places the ninth to seventeenth items of past content information on the inner approximate circle than the first approximate circle on which the past content information have already been placed. It should be noted that the output unit 1209 performs the blurring processing corresponding to the blurring coefficient "2" on the thumbnails arranged on the first approximate circle of past content information. The blurring processing corresponding to the blurring coefficient "2" is the stronger blurring processing than that for the thumbnails arranged on the first approximate circle.

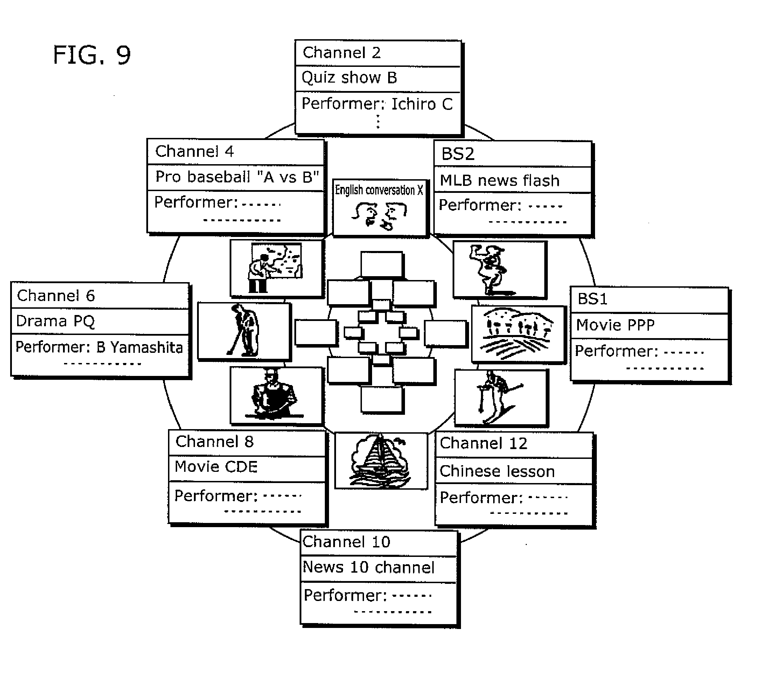

Next, the output unit 1209 changes the blurring coefficient to "3". The output unit 1209 performs the following processing in order to display the third approximate circle of past content information. To be more specific, the output unit 1209 obtains the eighteenth to twenty-fifth items of past content information. Then, the output unit 1209 places the eighteenth to twenty-fifth items of past content information on the inner approximate circle than the third approximate circle on which the past content information has already been placed. FIG. 9 shows the past content information as it will appear when arranged. It is assumed here that the display of past content information is the display of three concentric circles.

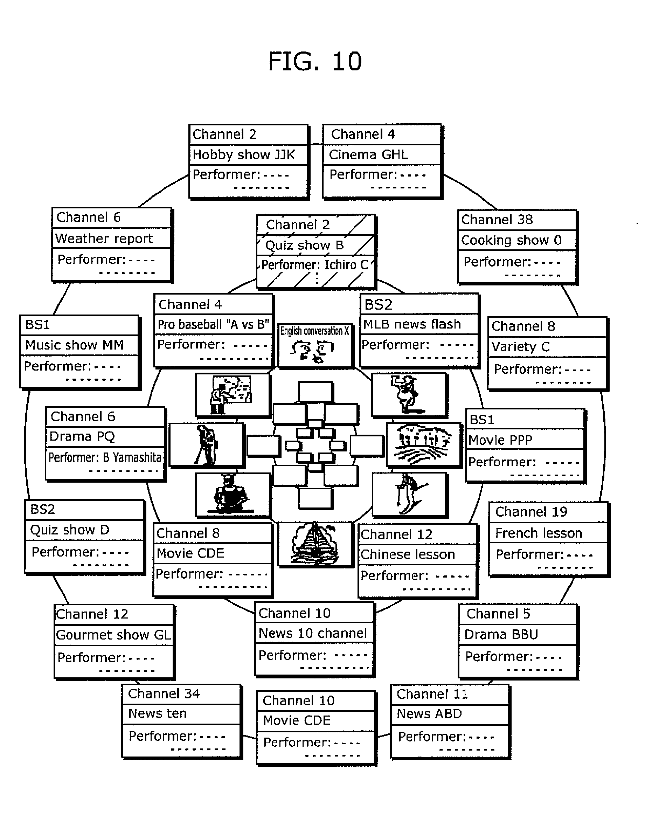

Next, the output unit 1209 performs the following processing for placing future content information. To be more specific, the output unit 1209 substitutes 1 into the blurring coefficient. The output unit 1209 performs the processing for displaying the first circle of future content information as follows. The output unit 1209 obtains, from the program information of FIG. 6, thirteen items of future content information to be placed on the first circle. Then, as shown in FIG. 10, the output unit 1209 places these items of future content information outside of the concentric circle of current content information. The output unit 1209 displays the future content information in a blurring degree corresponding to the blurring coefficient "1". Here, the processing for placing the future content information is terminated assuming that the number of circles of future content information is one.

Then, the output unit 1209 displays the arranged past content information, current content information and future content information. FIG. 10 shows these information as it will appear when displayed.

It should be noted that in FIG. 10, the focus is placed on any one content information of current content information. In FIG. 10, the focus is placed on the current content information of "Channel 2".

Here, if a user presses the ENTER button of the remote control, the program "Quiz Show B" on Channel 2 which is currently being broadcast is selected.

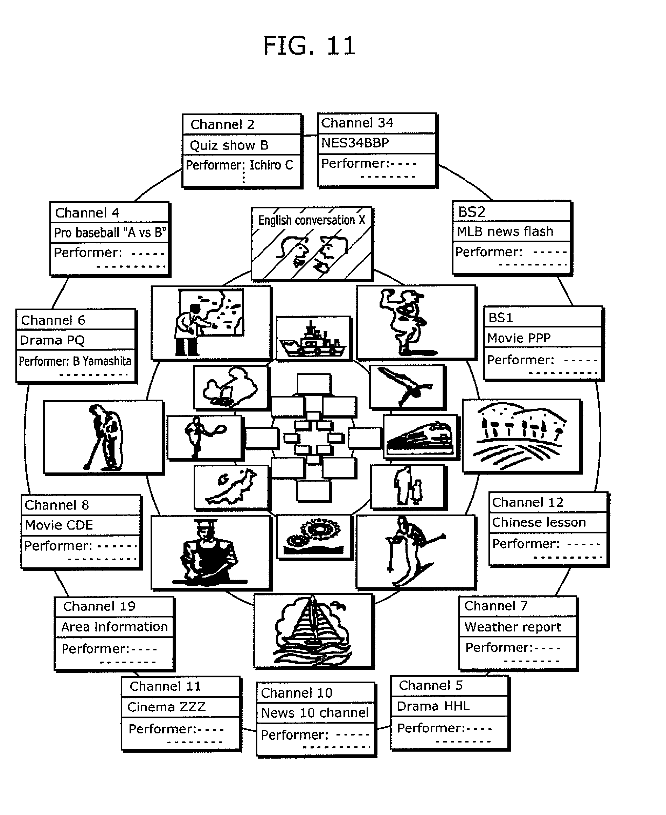

For example, if the user presses the down-arrow key of the cross keypad of the remote control, the focus shifts from the current content information to any one content information on the first circle of past content information. For example, the focus shifts to the past content information "English conversation X". In this case, as shown in FIG. 11, the first circle of the past content information becomes the second circle from the outside, and the blurring of the past content information on the first circle disappears so that the past content information is clearly displayed. If the user presses the ENTER button here, the past content corresponding to the past content information "English conversation X" (a recorded program concerning English conversation) is reproduced. It should be noted that in this case, the outermost circle is the circle of current content information, which is displayed in a blurred manner.

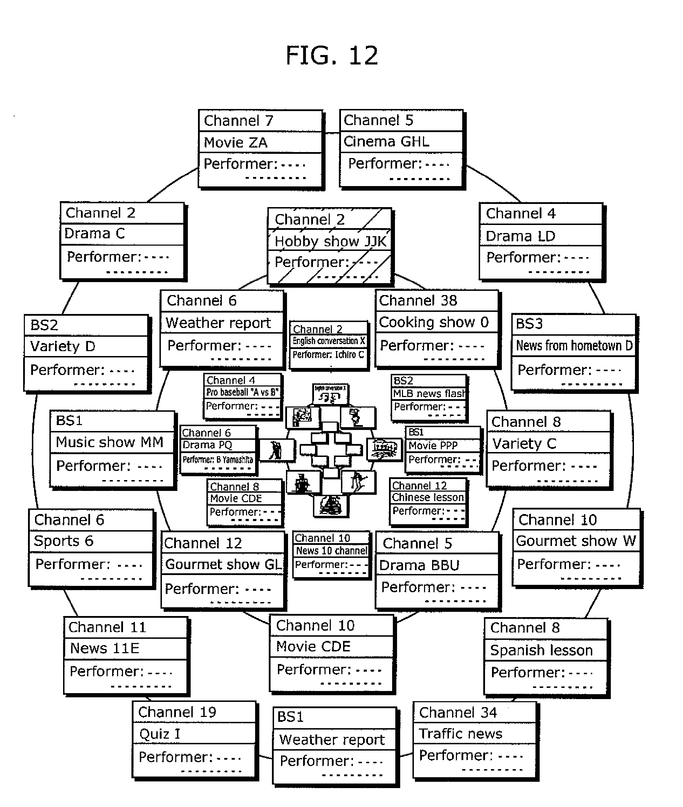

Furthermore, if the user presses the up-arrow key of the cross keypad of the remote control twice, for example, the first and second circles of the future content information which have disappeared from the screen appear again, and the focus shifts to any one content information on the first circle (see FIG. 12). Then, if the user dials the jog dial button, the focus shifts among the items of content information which are placed concentrically. For example, if the user presses the ENTER button of the remote control when the focus is placed on one future content information, the timer recording of that information is preset.

According to the above-mentioned present embodiment, it is possible to operate past content information, current content information and future content information using the same interface. Therefore, the user can seamlessly handle past contents, current contents and future contents which are processed in a digital television equipped with a large capacity hard disk or the like which is currently on the market and expected to be more popular from now on, a video system in which a television and a hard disk drive are connected, or the like. It also becomes possible to display so-called past contents, current contents and future contents outputted from television for user's easy viewing so as to be clearly distinguished from each other. Furthermore, by performing the same action (for example, by pressing the ENTER button) with respect to the past content information, the current content information and the future content information, the user can cause the apparatus to perform the processing suitable for each type of contents to be executed. The processing suitable for each type of contents is, for example, reproduction for past contents, channel switch for current contents, and preset timer recording for future contents. This also applies to other embodiments.

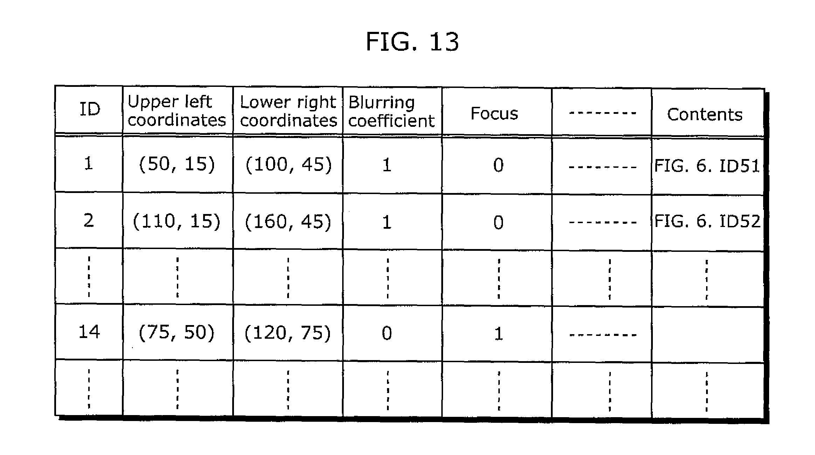

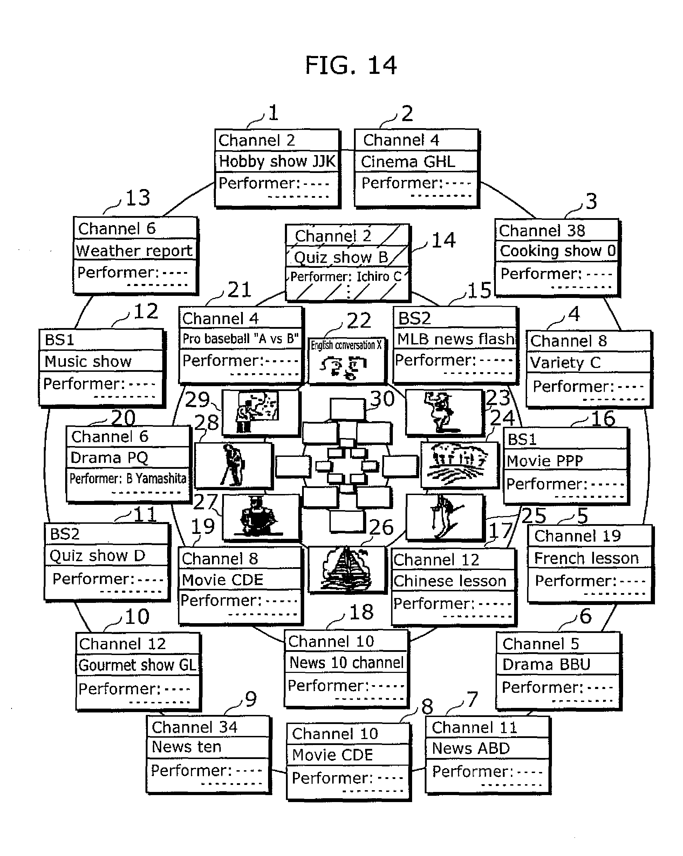

Note that in the present embodiment, the content list is outputted in the following method, for example. The output unit 1209 holds a window management table shown in FIG. 13. The window management table contains a plurality of records each having attribute values such as "ID", "Upper left coordinates (x1, y1)", "Lower right coordinates (x2, y2)", "Blurring coefficient", "Focus" and "Contents". "ID" is information for identifying each record and used for managing the record on the table. "Upper left coordinates (x1, y1)" and "Lower right coordinates (x2, y2)" respectively indicate the upper left coordinates (x1, y1) and the lower right coordinates (x2, y2) on a rectangular window. "Blurring coefficient" is a numerical value indicating a degree of blurring of a content to be displayed in a window. Note that the degree of blurring may be embodied as a level of brightness, a change in color or a change in transmittance. "Focus" is information indicating whether the window is focused or not. The case where the attribute value of "Focus" is "1" indicates that the window is focused, while the case of "0" indicates that the window is not focused. "Contents" indicates a content to be displayed in the window. The case where the attribute value of "Contents" is "FIG. 6. ID51" indicates that a content to be displayed in the window is program information of "ID-51" in the electronic program table in FIG. 6. The window management table contains information about all the windows in the content list in FIG. 14. Since the focus is placed on the window assigned the number "14" in the content list of FIG. 14, the background of the window is shaded. In addition, a change of content information to be displayed in a window by a user's operation is achieved by the processing for rewriting the attribute value of "Contents".

It should be noted that since a technique for displaying windows using the window management table shown in FIG. 13 has been publicly known, a further detailed description thereof is not made. It should be also noted that the above description is just one example of a method for outputting a content list and any algorithm can be used for the output method. This also applies to other embodiments.

In the specific example of the present embodiment, the output unit of the information output apparatus outputs current content information in the most eye-catching manner, but it does not always need to output in this manner. This also applies to other embodiments.

In the specific example of the present embodiment, current content information is outputted in the most eye-catching manner by changing the blurring, for example. However, it is also possible to output content information in various sizes in order to change the type of content information which should catch the user's eye. This processing for changing the degree of visibility of content information also applies to other embodiments.

In the specific example of the present embodiment, a predetermined concept is time information that is time-related information, but it may be any other information. This also applies to other embodiments.

In the specific example of the present embodiment, the output unit arranges all or a part of past content information, current content information and future content information and outputs them, based on predetermined concepts of past contents, current contents and future contents. However, the output unit may arrange all or a part of two types of content information, that is, past content information and current content information and output them, based on predetermined concepts of past contents and current contents. This also applies to other embodiments.

Furthermore, the processing in the present embodiment may be realized by software. This software may be distributed via download of it or the like. This software may also be recorded on a recording medium such as a CD-ROM and circulated in that form. Note that this applies to other embodiments of this specification. It should be also noted that the software for realizing the information output apparatus in the present embodiment is the following program. To be more specific, this program is a program for causing a computer to execute an output step of arranging all or a part of past content information and current content information and outputting them, based on predetermined concepts of past contents and current contents. It is preferable that in the output step, all or a part of past content information, current content information and future content information are arranged and outputted, based on predetermined concepts of past contents, current contents and future contents.

Furthermore, it is preferable that in the output step, all or a part of past content information and current content information, or all or a part of past content information, current content information and future content information are arranged in two or more approximate circles and they are outputted so that the two or more approximate circles are arranged in an approximately concentric manner, based on predetermined concepts of past contents and current contents, or those of past contents, current contents and future contents. It is also preferable that the predetermined concept is time-related information, and in the output step, all or a part of the past content information and current content information, or all or a part of the past content information, current content information and future content information are arranged in two or more approximate circles and they are outputted so that the two or more approximate circles are arranged in an approximately concentric manner, based on time-related information of the past contents and current contents, or that of the past contents, current contents and future contents. Furthermore, it is preferable that in the output step, all or a part of the past content information and current content information, or all or a part of the past content information, current content information and future content information are outputted in different approximate circles.

### (Second Embodiment)

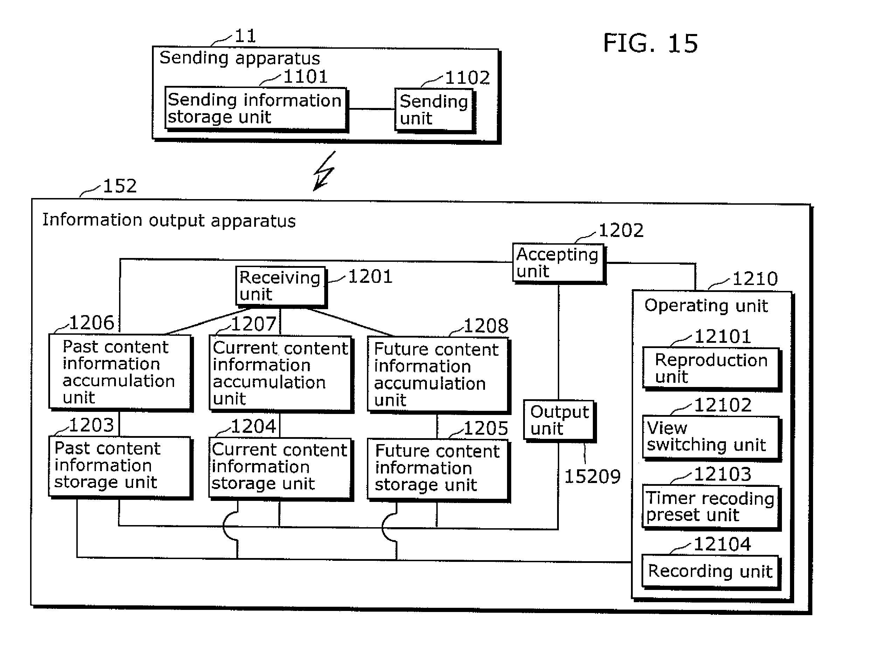

FIG. 15 is a block diagram of an information processing system in the present embodiment. This information processing system includes the sending apparatus 11 and an information output apparatus 152. The information output apparatus 152 includes the receiving unit 1201, the accepting unit 1202, the past content information storage unit 1203, the current content information storage unit 1204, the future content information storage unit 1205, the past content information accumulation unit 1206, the current content information accumulation unit 1207, the future content information accumulation unit 1208, an output unit 15209 and the operating unit 1210.

The output unit 15209 outputs all or a part of past content information and current content information, or all or a part of past content information, current content information and future content information so that they are arranged in a spiral shape, based on predetermined concepts of past contents and current contents, or those of past contents, current contents and future contents. As described above, the predetermined concepts are a time concept and other concepts indicated by attribute values. Furthermore, it is preferable that the output unit 15209 outputs current content information in the most eye-catching display manner. Outputting current content information in the most eye-catching manner means, for example, displaying current content information in a larger size than past content information, or than past content information and future content information. Outputting current content information in the most eye-catching manner means, for example, displaying current content information in a more unblurred and clearer display manner than past content information, or than past content information and future content information. The above-mentioned output is a concept which mainly means a display on a display screen, but includes sound output, print output to a printer, sending to an external device and the like. It does not matter whether or not the output unit 15209 includes an output device such as a display and a speaker. The output unit 15209 can be embodied by a software for performing output processing, or a combination of a software for performing output processing, a driver software of an output device, the output device, and the like. Furthermore, an approximately spiral shape is good enough as a spiral shape.

An operation of the information processing system will be described below. The operation of the sending apparatus 11 has already been described.

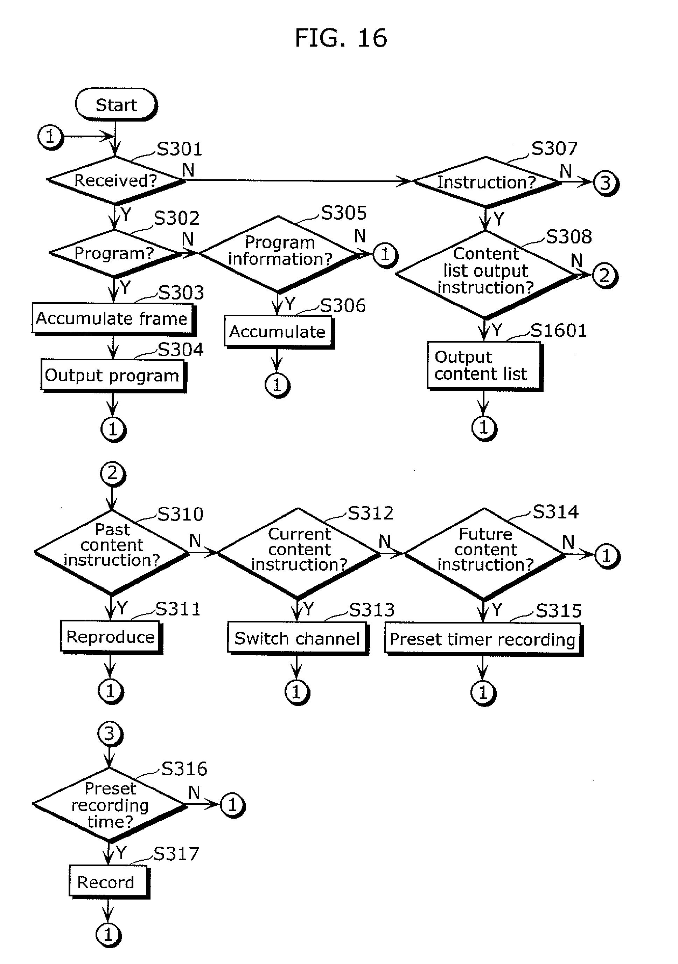

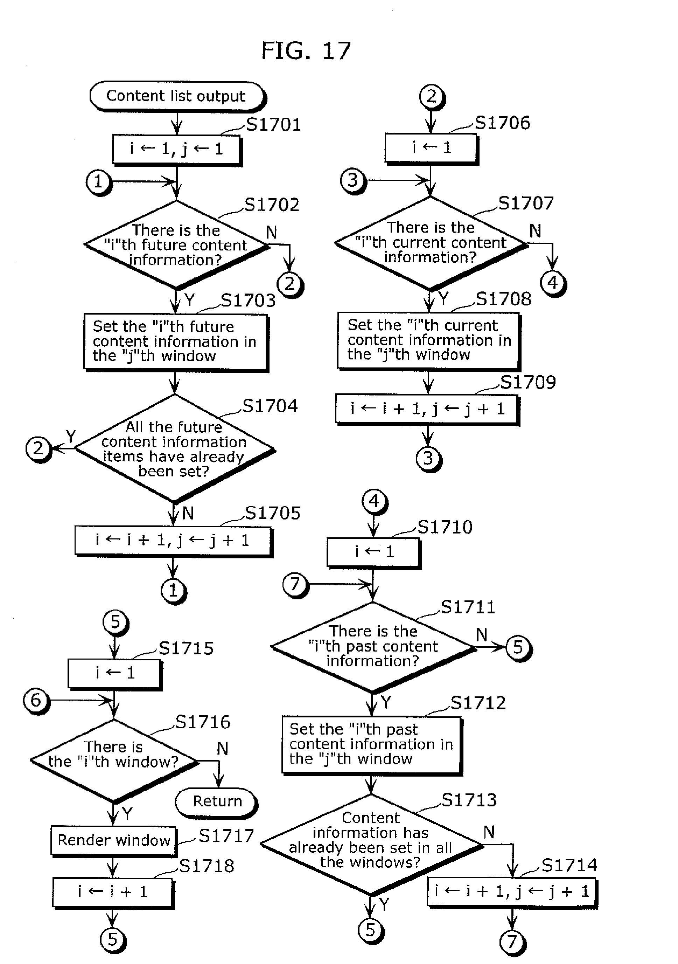

Next, an operation of the information output apparatus 152 will be described with reference to the flowcharts of FIG. 16 and FIG. 17. Only the steps in FIG. 16 which are different from those in the flowchart of FIG. 3 will be described.

(Step S308) The accepting unit 1202 judges whether the instruction accepted in Step S307 is a content list output instruction or not. If it is a content list output instruction, the process goes to Step S1601, while if it is not a content list output instruction, the process goes to Step S310.

(Step S1601) The output unit 15209 outputs a content list. To be more specific, the output unit 15209 outputs all or a part of past content information and current content information, or all or a part of past content information, current content information and future content information so that they are arranged in a spiral shape, based on predetermined concepts of past contents and current contents, or those of past contents, current contents and future contents. A specific example of a content list output operation by the output unit 15209 will be described later. It should be noted that a detailed example of the content list output operation by the output unit 15209 will be described with reference to the flowchart of FIG. 17.

It should be noted that in the flowchart of FIG. 16, the processing is terminated by an interruption of power-down or process termination.

Next, a detailed example of the content list output operation will be described with reference to the flowchart of FIG. 17. It should be noted that the output unit 15209 holds a window management table (of which specific example will be described later) for arranging all or a part of past content information, current content information and future content information in a spiral shape. The window management table held by the output unit 15209 manages information of a plurality of windows which can be arranged in a spiral shape in order to output contents in a spiral shape.

(Step S1701) The output unit 15209 substitutes 1 into the counters i and j.

(Step S1702) The output unit 15209 judges whether or not there is the "i"th future content information in the future content information storage unit 1205. It should be noted that, for example, the "i"th future content information is the information of the program to be broadcast in the "i"th seen from the current time among the programs which are to be broadcast in the near future. If there is the "i"th future content information, the process goes to Step S1703, while if there is not the "i"th future content information, the process jumps to Step S1706. It should be noted that the first future content information, for example, is the program information of the program which is to be broadcast in the nearest future from the current time.

(Step S1703) The output unit 15209 sets the "i"th future content information in the "j"th window. This "setting" means that the attribute value of the content in the "j"th window is regarded as the "i"th future content information. A specific example will be described later.

(Step S1704) The output unit 15209 judges whether or not to terminate the processing of future content information. To be more specific, the maximum number of future content information to be displayed is predetermined, and the output unit 15209 judges whether "i" is equal to the predetermined maximum number or not. If it judges to terminate the processing of future content information, the process goes to Step S1706, while if it judges not to terminate the processing of future content information, the process goes to Step S1705.

(Step S1705) The output unit 15209 increments the counters i and j by one respectively.

(Step S1706) The output unit 15209 substitutes 1 into the counter i.

(Step S1707) The output unit 15209 judges whether or not there is the "i"th current content information in the current content information storage unit 1204. If there is the "i"th current content information, the process goes to Step S1708, while if there is not the "i"th current content information, the process jumps to Step S1710.

(Step S1708) The output unit 15209 sets the "i"th current content information in the "j"th window.

(Step S1709) The output unit 15209 increments the counters i and j by one respectively. The process returns to Step S1707.

(Step S1710) The output unit 15209 substitutes 1 into the counter i.

(Step S1711) The output unit 15209 judges whether or not there is the "i"th past content information in the past content information storage unit 1203. If there is the "i"th past content information, the process goes to Step S1712, while if there is not the "'i"th past content information, the process jumps to Step S1715. It should be noted that the first past content information is, for example, a program which has been accumulated in the nearest past from the current time and the information about the program.

(Step S1712) The output unit 15209 sets the "i"th past content information in the "j"th window.

(Step S1713) The output unit 15209 judges whether or not the content information has been set in all the windows to be displayed. If the setting has been completed, the process goes to Step S1715, while if it has not yet been completed, the process goes to Step S1714.

(Step S1714) The output unit 15209 increments the counters i and j by one respectively. The process jumps to Step S1711.

(Step S1715) The output unit 15209 substitutes 1 into the counter i.

(Step S1716) The output unit 15209 judges whether or not there is the "i"th window. If there is the "i"th window, the process goes to Step S1717, while if there is not the "i"th window, the process returns to the higher function.

(Step S1717) The output unit 15209 renders the "i"th window. To be more specific, the output unit 15209 creates a window frame based on the attribute values of the window such as coordinate information and displays content information in the window frame. It should be noted that rendering of a window also includes display of content information in the window.

(Step S1718) The output unit 15209 increments the counter i by one. The process returns to Step S1716.

A specific operation of the information processing system in the present embodiment will be described below. The conceptual diagram of the information processing system is shown in FIG. 1.

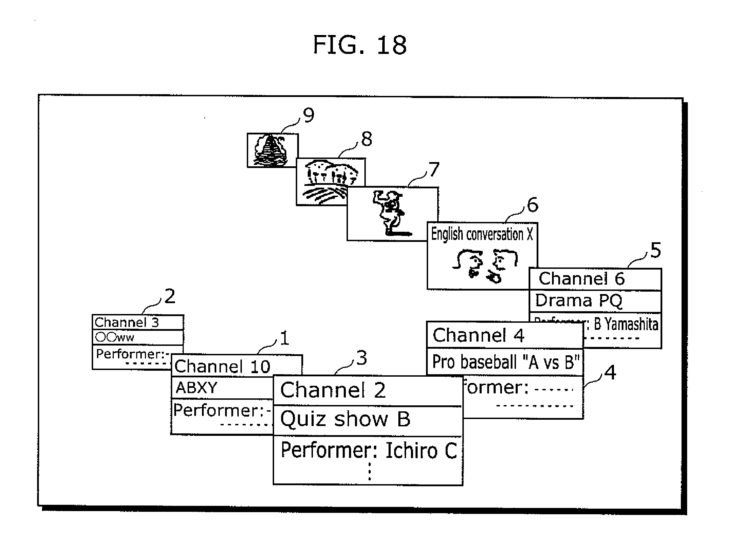

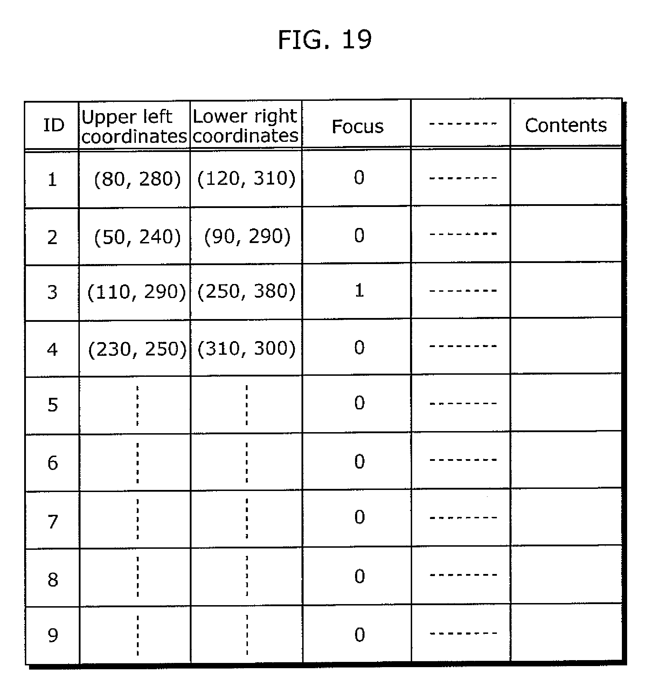

As shown in FIG. 18, in the present embodiment, the output unit 15209 displays contents in a spiral shape. The output unit 15209 holds a window management table shown in FIG. 19. The window management table contains a plurality of records, each having attribute values such as "ID", "Upper left coordinate (x1, y1)", "Lower right coordinates (x2, y2)", "Focus" and "Contents". The record (window information) identified by the attribute value "ID" in the window management table corresponds to the rectangular frame assigned to each window in FIG. 18. The initial value of the attribute value "Contents" is NULL.

Past contents are TV programs (programs such as a movie, a drama and news) which have been received by the receiving unit 1201. Past content information stored in the past content information storage unit 1203 is a program and program information including information of its broadcast time slot, a program title and performers' names. The past content information stored in the past content information storage unit 1203 is shown in FIG. 5.

Current contents are TV programs which are being broadcast currently. It is assumed that it is currently August 5, 2004, 19:15. Current content information stored in the current content information storage unit 1204 is assumed to be information (SI information) of a previously received and accumulated electronic program table. Program information includes information of a broadcast channel, a broadcast date, a broadcast time slot, a title, a category and performers.

Furthermore, future contents are programs to be broadcast from now on. Future content information stored in the future content information storage unit 1205 is assumed to be previously received and accumulated program information (SI information). In other words, the future content information and the current content information are the same information here. The information output apparatus 152 contains a clock, and obtains current content information or future content information from the stored information of the electronic program table, based on the information of the current time of the clock. It should be noted that the program information (electronic program table) which has been received by the receiving unit 1201 and accumulated is shown in FIG. 6.

Next, it is assumed that a user inputs a content list output instruction using a remote control, for example. In such case, the accepting unit 1202 accepts the content list output instruction.

Next, the output unit 15209 obtains the first future content information. The first future content information is program information which is to be broadcast in the nearest future from the current time, and is obtained from the program table of FIG. 6. It is assumed here that the output unit 15209 determines that the first future content information is "FIG. 6. ID36". "FIG. 6. ID36" indicates content information of "ID=36" in the program table of FIG. 6. The output unit 15209 writes "FIG. 6. ID36" into the attribute value "Contents" corresponding to "ID=1" in the window management table of FIG. 19. This processing for writing "FIG. 6. ID36" is the above-mentioned "setting".

The output unit 15209 obtains the second future content information in the same manner. The second future content information is assumed to be the content information indicated by "FIG. 6. ID37". The output unit 15209 writes "FIG. 6. ID37" into the attribute value "Contents" corresponding to "ID=2" in the window management table of FIG. 19. It should be noted that up to two items of future content information are displayed here.

Next, the output unit 15209 obtains the first to third current content information, and writes the information (such as "FIG. 6. ID1") for identifying the content information into the attribute values "Contents" corresponding to "ID=3" to "ID=5" in the window management table of FIG. 19.

Next, the output unit 15209 obtains the first to the fourth past content information, and writes the information (such as "FIG. 5. IDn") for identifying these content information into the attribute values "Contents" corresponding to "ID=6" to "ID=9".

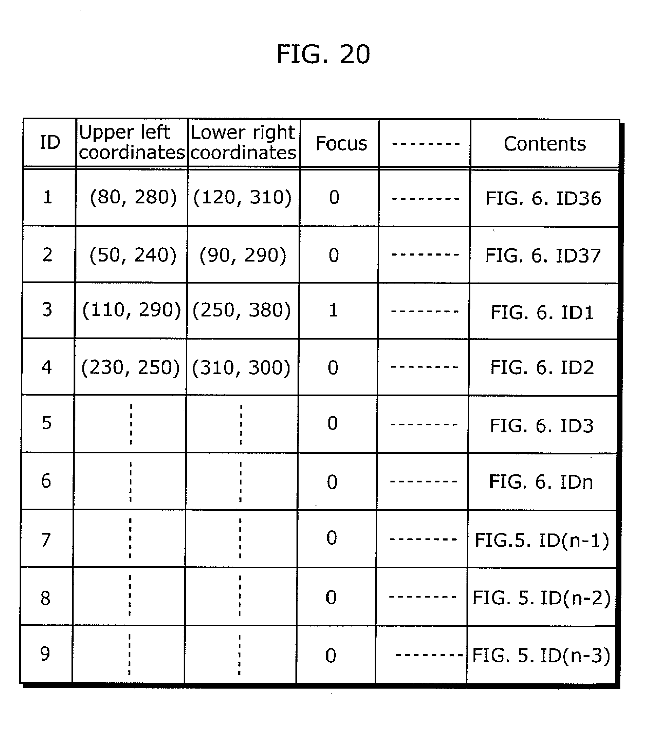

The output unit 15209 obtains a window management table of FIG. 20 by performing the above processing.

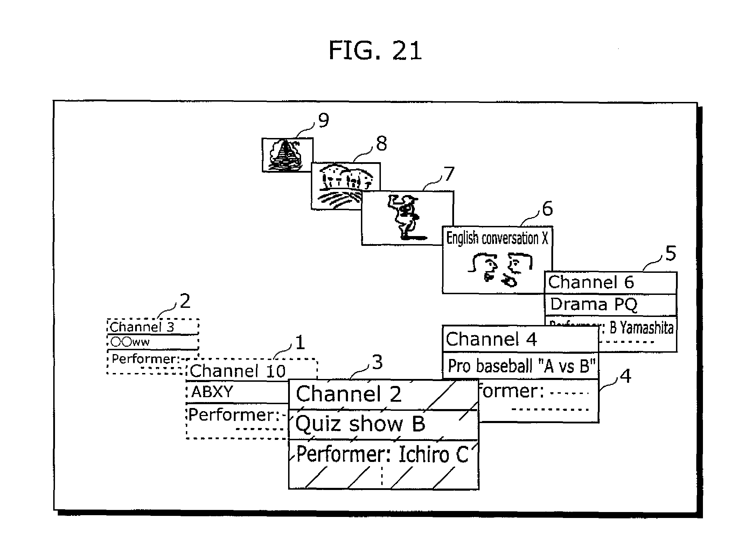

Next, the output unit 15209 displays windows and content information based on the window management table of FIG. 20. FIG. 21 shows how they are displayed.

In the display styles of FIG. 21, since the display styles of the window frames for future content information, current content information and past content information are different from each other, a user can distinguish the type of content information in a window easily at a glance, future content information, current content information or past content information.

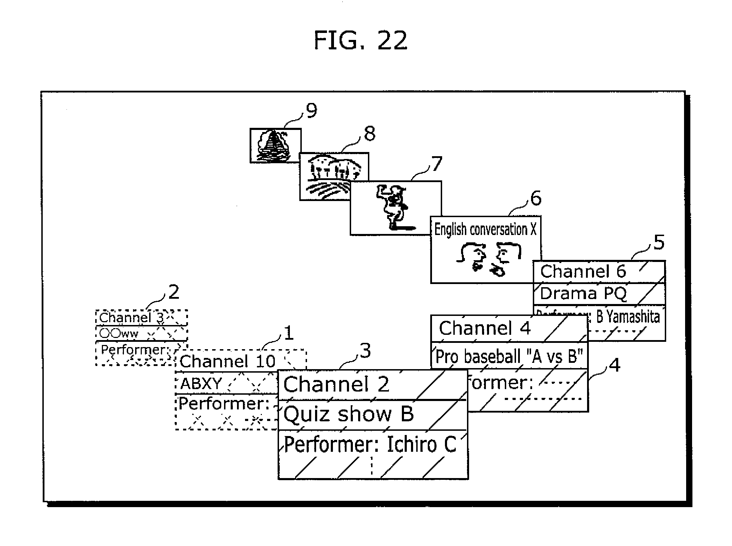

It should be noted that the output unit 15209 may display future content information, current content information and past content information in the modes as shown in FIG. 22. In FIG. 22, a user can distinguish the type of content information in a window easily at a glance, future content information, current content information or past content information, because the backgrounds of the windows are different according to the types.

It should be noted that in FIG. 21, focus is placed on the current content information on "Channel 2". Here, if a user presses the ENTER button of a remote control, the program "Quiz show B" which is currently being broadcast on channel 2 is selected.

It is assumed that if a user dials a jog dial of a remote control, the focus shifts from current content information to past content information direction or future content direction, for example. This action of dialing the jog dial is compatible with spiral window display.

If a user presses the ENTER button of a remote control in the case where the focus is placed on future content information, timer recording is preset. If a user presses the ENTER button of a remote control in the case where the focus is placed on past content information, the past content is reproduced.

According to the above-described present embodiment, it becomes possible to handle past content information, current content information and future content information using the same interface. Therefore, a user can seamlessly handle past contents, current contents and future contents which are processed in a digital television equipped with a large capacity hard disk or the like which is currently on the market and expected to be more popular from now on, a video system in which a television and a hard disk drive are connected, or the like. The present embodiment also allows a user to view so-called past contents, current contents and future contents outputted on a television screen, so that they can be easily distinguished from each other at a glance. Furthermore, by performing the same action (for example, by pressing the ENTER button) with respect to the past content information, the current content information and the future content information, the user can cause the apparatus to perform the processing suitable for each type of contents to be executed.

It should be noted that any algorithm can be used for outputting a content list. The output unit only needs to output all or a part of past content information and current content information, or all or a part of past content information, current content information and future content information so that they are arranged in a spiral shape, based on predetermined concepts of past contents and current contents, or those of past contents, current contents and future contents.

Furthermore, software for realizing the information output apparatus in the present embodiment is the following program. More specifically, this program is a program for causing a computer to execute an output step of arranging and outputting all or a part of past content information and current content information, based on predetermined concepts of past contents and current contents. It is preferable that in the output step, all or a part of past content information, current content information and future content information are arranged and outputted, based on predetermined concepts of past contents, current contents and future contents. It is preferable that in the output step, all or a part of past content information and current content information, or all or a part of past content information, current content information and future content information are outputted so that they are arranged in a spiral shape, based on predetermined concepts of past contents and current contents, or those of past contents, current contents and future contents. It is also preferable that the predetermined concept is time information that is the time-related information, and in the output step, all or a part of past content information and current content information, or all or a part of past content information, current content information and future content information are outputted so that they are arranged in a spiral shape, based on the time-related information of past contents and current contents, or that of past contents, current contents and future contents.

### (Third Embodiment)

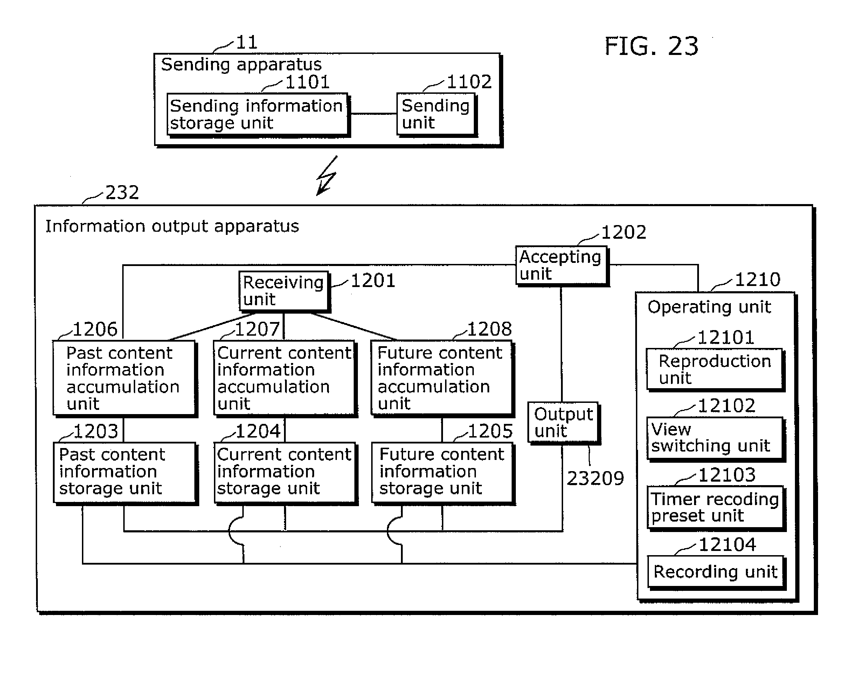

FIG. 23 a block diagram of an information processing system in the present embodiment. This information processing system includes the sending apparatus 11 and an information output apparatus 232. The information output apparatus 232 includes the receiving unit 1201, the accepting unit 1202, the past content information storage unit 1203, the current content information storage unit 1204, the future content information storage unit 1205, the past content information accumulation unit 1206, the current content information accumulation unit 1207, the future content information accumulation unit 1208, an output unit 23209, and the operating unit 1210.

The output unit 23209 outputs all or a part of past content information and current content information, or all or a part of past content information, current content information and future content information so that they are arranged in a line (a single row and M columns) or in a matrix (N rows and M columns), based on predetermined concepts of past contents and current contents, or those of past contents, current contents and future contents. A specific display style will be described later.

Here, predetermined concepts are a time concept and concepts indicated by other attribute values, as described above. Furthermore, it is preferable that the output unit 23209 outputs current content information in the most eye-catching manner. Outputting current content information in the most-eye-catching manner means, for example, displaying current content information in a larger size than past content information, or than past content information and future content information. Outputting current content information in the most eye-catching manner means, for example, displaying current content information in a more unblurred and clearer display manner than past content information, or than past content information and future content information. The above-mentioned output is a concept which mainly means a display on a display screen, but includes sound output, print output to a printer, sending to an external device and the like. It does not matter whether or not the output unit 23209 includes an output device such as a display and a speaker. The output unit 23209 can be embodied by a software for performing output processing, or a combination of a software for performing output processing, a driver software of an output device, the output device and the like.

An operation of the information processing system will be described below. The operation of the sending apparatus 11 has already been described.

Next, as for the operation of the information output apparatus 232, all the processing is same as the processing performed by the information output apparatus 152, except that in the content list output processing in Step S1601 of FIG. 16, the former information output apparatus 232 outputs all or a part of past content information, current content information and future content information so that they are arranged in a line (a single row and M columns) or a matrix (N lines and M columns).

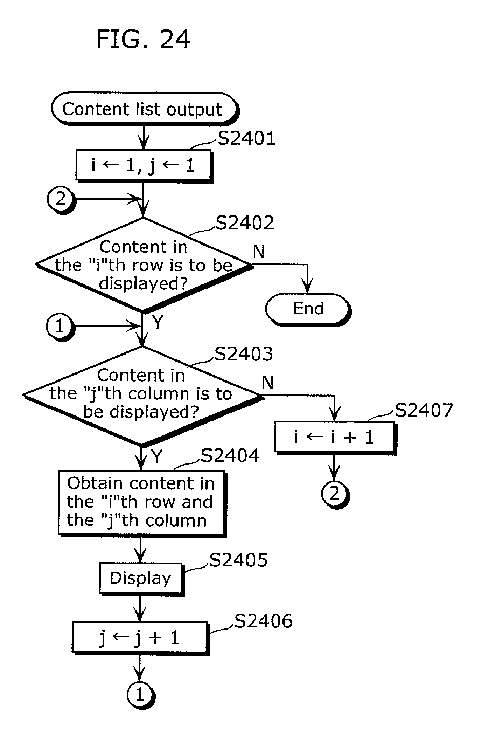

Next, a detailed example of a content list output operation will be described with reference to the flowchart of FIG. 24. It should be noted that the output unit 23209 holds a window management table (of which specific example will be described later) for arranging all or a part of past content information, current content information and future content information in a matrix. In other words, the window management table held by the output unit 23209 manages information of a plurality of windows which can be arranged in a matrix in order to output contents in a matrix.

(Step S2401) 1 is substituted into the counters i and j respectively.

(Step S2402) The output unit 23209 judges whether or not to display the content in the "i"th row. It should be noted that it is assumed here that how many rows of contents are to be displayed is predetermined. In the case where the content in the "i"th row is to be displayed, the process goes to Step S2403, while in the case where the content in the "i"th row is not to be displayed, the process is terminated.

(Step S2403) The output unit 23209 judges whether or not to display the content in the "j"th column. It should be noted that it is assumed here that how many columns of contents are to be displayed is predetermined. In the case where the content in the "j"th column is to be displayed, the process goes to Step S2404, while in the case where the content in the "j"th column is not to be displayed, the process goes to Step S2407.

(Step S2404) The output unit 23209 obtains the content in the "i"th row and the "j"th column from the window management table.

(Step S2405) It displays the content obtained in Step S2404 in the window in the "i"th row and the "j"th column.

(Step S2406) It increments the counter j by one. The process returns to Step S2403.

(Step S2407) It increments the counter i by one. The process returns to Step S2402.

A specific operation of the information processing system in the present embodiment will be described below. A conceptual diagram of the information processing system is shown in FIG. 1.

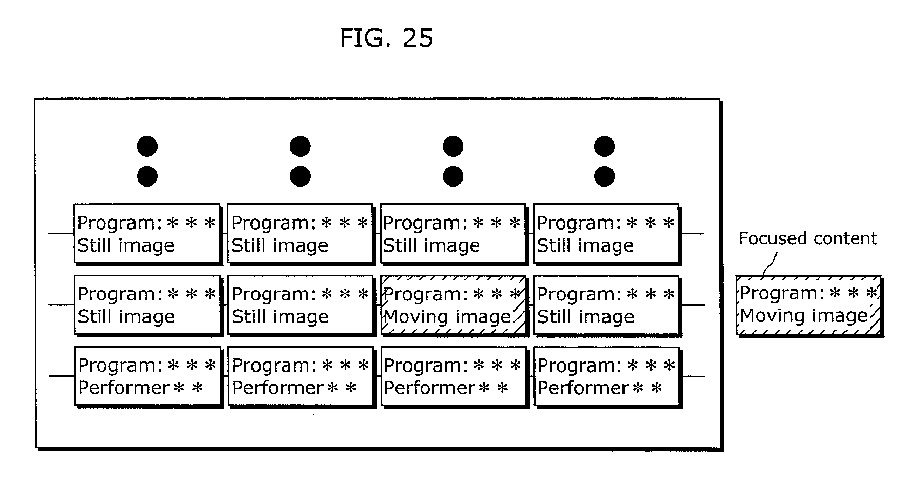

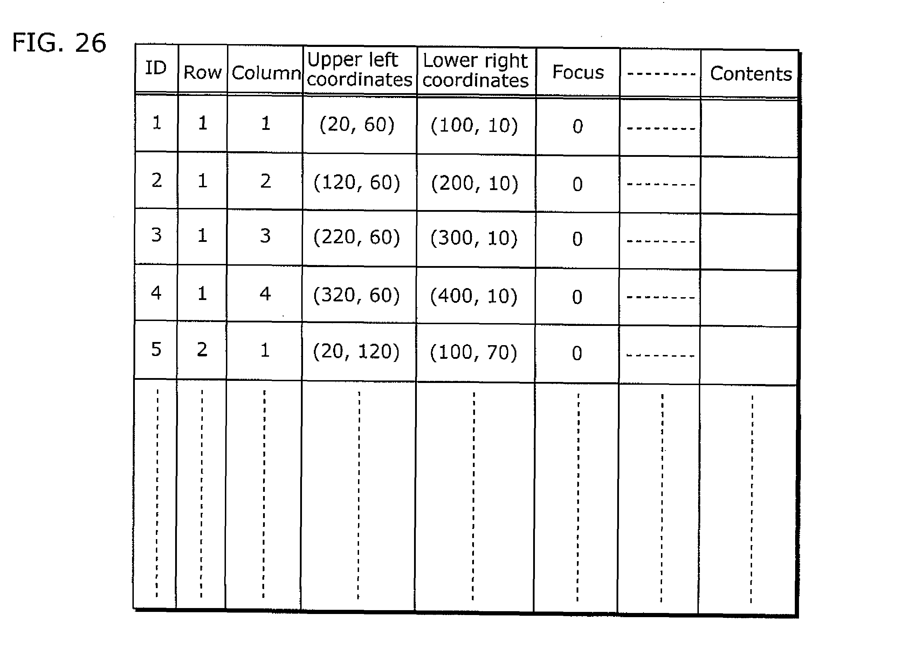

As shown in FIG. 25, in the present embodiment, the output unit 23209 displays contents in a matrix. The output unit 23209 holds a window management table shown in FIG. 26. The output unit 23209 displays the contents as shown in FIG. 25, based on the window management table shown in FIG. 26 (see the flowchart of FIG. 24).

More specifically, in FIG. 25, for example, program information (future contents) which is to be broadcast this week is displayed in the boxes in the bottom row. Program information (current contents) which is currently being broadcast is displayed in the boxes in the second row from the bottom. A still image or a moving image of a program which is currently being broadcast is suitable as a current content. Furthermore, program information (past contents) accumulated in the past is displayed in the third row from the bottom.

In FIG. 25, the content on which the focus is placed is a program which is currently being broadcast and a moving image. The information output apparatus 232 is equipped with a tuner, and is tuned to the channel on which the currently focused content is being broadcast.

During the display of content information shown in FIG. 25, the information output apparatus 232 accepts a user's instruction (an instruction to change the display of content information). In the case where the information output apparatus 232 has accepted such instruction, it shifts the focus or changes content information to be displayed, as with the first and second embodiments. The change of content information to be displayed is as follows, for example. In the case where a user presses the up-arrow key of the cross keypad of a remote control, current content information is shifted to the bottom, future content information disappears from the display, and the number of rows for displaying past content information increases by one.

According to the above-described present embodiment, it becomes possible to display past content information, current content information and future content information in a matrix. It also becomes possible to handle past content information, current content information and future content information using the same interface. Therefore, a user can seamlessly handle past contents, current contents and future contents which are processed in a digital television equipped with a large capacity hard disk or the like which is currently on the market and expected to be more popular from now on, a video system in which a television and a hard disk drive are connected, or the like. The present embodiment also allows a user to view so-called past contents, current contents and future contents outputted on a television screen, so that they can be easily distinguished from each other at a glance.

It should be noted that it has not been described in the present embodiment that a user can cause the apparatus to perform the processing suitable for each type of contents by doing the same action (for example, by pressing the ENTER button) with respect to the past content information, the current content information and the future content information, but this processing is same as that described in the first and second embodiments. In other words, it is possible to cause the apparatus to perform the processing suitable for each type of contents by doing the same action (for example, by pressing the ENTER button) with respect to the past content information, the current content information and the future content information outputted in a matrix.

Furthermore, software for realizing the information output apparatus in the present embodiment is the following program. More specifically, this program is a program for causing a computer to execute an output step of arranging and outputting all or a part of past content information and current content information, based on predetermined concepts of past contents and current contents. It is a program for arranging and outputting, in the output step, all or a part of past content information, current content information and future content information based on predetermined concepts of past contents, current contents and future contents. It is a program for arranging and outputting, in the output step, all or a part of past content information and current content information, or all or a part of past content information, current content information and future content information in a matrix, based on predetermined concepts of past contents and current contents, or those of past contents, current contents and future contents. It is also a program, in which the predetermined concept is time information that is the time-related information, for arranging and outputting, in the output step, all or a part of past content information and current content information, or all or a part of past content information, current content information and future content information in a matrix, based on the time-related information of past contents and current contents, or that of past contents, current contents and future contents. Furthermore, it is a program for arranging and outputting, in the output step, all or a part of past content information and current content information, or all or a part of past content information, current content information and future content information respectively in different rows in a matrix.

A single computer or a plurality of computers may execute this program. In other words, either centralized processing or distributed processing may be performed.

In each of the above embodiments, each processing (each function) may be achieved by centralized processing by a single apparatus (system), or by distributed processing by a plurality of apparatuses.

It will be appreciated that modifications may be made in the present invention without being limited to the above-described embodiments, and all these modifications fall within the scope of the present invention.

### Industrial Applicability

As described above, the information output apparatus of the present invention has an effect that it allows a user to seamlessly handle contents which were accumulated in the past, contents which are currently being broadcast and contents which are to be broadcast in the future, and is of value as, for example, a digital television equipped with a hard disk.

## Claims

1. An information output apparatus comprising:
a past content information storage unit which stores one or more items of past content information, each including at least one of a past content and information about the past content, the past content being a content accumulated in the past;
a current content information storage unit which stores one or more items of current content information, each including at least one of an entirety or a part of a current content and program information, the current content being a currently broadcast program, and the program information being information about the current content;
a future content information storage unit which stores one or more items of future content information, each being information about a future content that is a program to be broadcast from now on; and
an output unit operable to arrange content information that is the past content information, the current content information and the future content information, and to output the content information in visually different display styles, based on time-related information included in the content information.

2. The information output apparatus according to Claim 1,
wherein said output unit is operable to output the content information in a display style in which color information of display gradually changes, per predetermined unit of the content information, according to the time-related information.

3. The information output apparatus according to Claim 2, further comprising
an accepting unit operable to accept a selection of content information to be focused,
wherein said output unit is operable to output the content information accepted by said accepting unit in an unblurred and clear display style, and to output other content information in a display style in which blurring of display gradually increases according to the time-related information.

4. The information output apparatus according to Claim 1,
wherein said output unit is operable to output the content information in a display style in which size of display gradually changes, per predetermined unit of the content information, according to the time-related information.

5. The information output apparatus according to Claim 4, further comprising
an accepting unit operable to accept a selection of content information to be focused,
wherein said output unit is operable to output the content information accepted by said accepting unit in a larger display size than other content information, and to output the other content information in a display size which gradually decreases according to the time-related information.

6. The information output apparatus according to Claim 1,
wherein said output unit is operable to output the content information in a display style in which color information and size of display gradually change, per predetermined unit of the content information, according to the time-related information.

7. The information output apparatus according to Claim 6, further comprising
an accepting unit operable to accept a selection of content information to be focused,
wherein said output unit is operable to output the content information accepted by said accepting unit not only in an unblurred and clear display style but also in a larger display size than other content information, and to output the other content information not only in a display style in which blurring of display gradually increases but also in a display size which gradually decreases, according to the time-related information.

8. An information output method comprising
an output step of arranging content information that is past content information, current content information and future content information and of outputting the content information in visually different display styles, based on time-related information included in the content information, the past content information including at least one of a past content that is a content accumulated in the past and information about the past content, the current content information including at least one of en entirety or a part of a current content that is a currently broadcast program and program information that is information about the current content, and the future content information being information about a future content that is a program to be broadcast from now on.

9. A program causing a computer to execute
an output step of arranging content information that is past content information, current content information and future content information and of outputting the content information in visually different display styles, based on time-related information included in the content information, the past content information including at least one of a past content that is a content accumulated in the past and information about the past content, the current content information including at least one of en entirety or a part of a current content that is a currently broadcast program and program information that is information about the current content, and the future content information being information about a future content that is a program to be broadcast from now on.
